# EUROPEAN PATENT APPLICATION

(11) **EP 4 657 493 A1**
(43) Date of publication of application: **03.12.2025**
(21) Application number: 24747178.2
(22) Date of filing: 16.01.2024
(51) Int. Cl.: H01J 49/02, G01N 27/62, G01N 30/72, G01N 35/04, H01J 49/00, H01J 49/42

(54) **MASS SPECTROMETER**

(30) Priority: 27.01.2023 JP 2023010678
(71) Applicant: Hitachi High-Tech Corporation, Minato-ku Tokyo 105-6409 (JP)
(72) Inventor: IDE, Kohki, Tokyo 105-6409 (JP); FURUYA, Isao, Tokyo 105-6409 (JP); KONDO, Suguru, Tokyo 105-6409 (JP); ONG, Zi Hao, Tokyo 105-6409 (JP); NISHIMOTO, Takuma, Tokyo 100-8280 (JP)
(74) Representative: Strehl & Partner mbB
(86) International application number: PCT/JP2024/001019
(87) International publication number: WO 2024/157847

(57) **Abstract**

To provide a mass spectrometer that is compact while improving the maintenance characteristic. A mass spectrometer 40 includes a first housing 206 and a second housing 208 disposed below the first housing, an ionization unit 201, a mass analysis unit 202 including a quadrupole mass filter, a mass detection unit 203, and an RF output unit 205 including a resonance circuit 108 applying radio-frequency voltage to the quadrupole mass filter are disposed in the first housing, a substrate storage unit 204 storing at least a control circuit substrate including an RF control circuit 101 generating a radio-frequency signal and an RF substrate including an RF amplifier 107 amplifying the radio-frequency signal and supplying the amplified radio-frequency signal to the resonance circuit is disposed in the second housing, the ionization unit, the mass analysis unit, and the mass detection unit are disposed in the first housing from a front surface toward a rear surface, and the substrate storage unit is disposed in the second housing on the front surface.

## Description

### Technical Field

The present invention relates to a mass spectrometer.

### Background Art

The mass spectrometer is an apparatus configured to ionize an analysis object specimen, and to analyze a mass of the generated ion so that the analysis object specimen is identified. In recent years, because of high measurement accuracy, the mass spectrometer has been utilized in the fields of the clinical examination and the pharmaceutical research and development. The mass spectrometer includes a mass spectrometry unit that separates the ion based on the mass. Among a plurality of systems for separating the ion based on the mass, the system using the quadrupole is a typical example as disclosed in Patent Literature 1. The mass spectrometry unit includes two electrode pairs (quadrupole electrode) while facing each other. Application of a radio-frequency voltage to the quadrupole electrode generates a radio-frequency electric field within the quadrupole electrode. Ions derived from the analysis object specimen move in the radio-frequency electric field while vibrating.

### Citation List

### Patent Literature

Patent Literature 1: Japanese Unexamined Patent Application Publication No. Hei 10-112282

### Summary of Invention

### Technical Problem

In order to attain processing of many specimens with high throughput, it is preferable for the mass spectrometer to continuously execute a series of operations of pre-processing the specimen carried in the apparatus, separating components of the specimen to be analyzed, and performing the mass spectrometry, and further to make the mass spectrometer compact. For this, the respective functions are modularized, and coupled with one another to form the apparatus. The mechanism that may be daily accessed by an operator for the analytical process and maintenance process has to be disposed on the front surface side of the mass spectrometer rather than disposed sideways and behind where another module is coupled.

Meanwhile, accuracy of the radio-frequency voltage to be applied to a mass analyzer (herein referred to as a quadrupole mass filter) using the quadrupole electrode gives an influence on the measurement accuracy of the ion to be detected. For this reason, the radio-frequency voltage to be applied is feedback controlled. Preferably, the control unit for executing the feedback control, and the controlled unit to be feedback controlled are disposed as closely as possible. If those units cannot be disposed closely to each other, the influence of noise generated by communication between the control unit and the controlled unit may deteriorate the feedback control accuracy. Solution to Problem

A mass spectrometer according to an aspect of the present invention includes a mass spectrometry unit. The mass spectrometry unit includes a first housing and a second housing disposed below the first housing. The first housing houses an ionization unit that ionizes an analysis object specimen, a mass analysis unit that includes a quadrupole mass filter that receives ions from the ionization unit, and passes the ion having a predetermined mass to charge ratio (m/z), a mass detection unit that detects the ion passing through the mass analysis unit, and an RF output unit that includes a resonance circuit for superimposingly applying direct current voltage and radio-frequency voltage to the quadrupole mass filter. The second housing houses a substrate storage unit that stores at least a control circuit substrate including an RF control substrate for generating the radio-frequency signal, and an RF substrate having an RF amplifier that amplifies the radio-frequency signal, and supplies the amplified radio-frequency signal to the resonance circuit. In the first housing, the ionization unit, the mass analysis unit, and the mass detection unit are disposed from a front surface toward a rear surface. In the second housing, the substrate storage unit is disposed on the front surface side.

### Advantageous Effects of Invention

To provide a mass spectrometer that is compact while improving the maintenance characteristic. Other objects and novel features concerning the disclosure will be clarified from the content of this description and the accompanying drawings.

### Brief Description of Drawings

[FIG. 1] FIG. 1 is a configuration example of a mass spectrometer.
[FIG. 2] FIG. 2 is a layout example of units configuring a mass spectrometry unit.
[FIG. 3A] FIG. 3A is a drawing for explaining a configuration of a quadrupole mass filter.
[FIG. 3B] FIG. 3B is a drawing for explaining a configuration of the quadrupole mass filter.
[FIG. 4] FIG. 4 is a configuration example of a power circuit of the quadrupole mass filter.
[FIG. 5] FIG. 5 is a control circuit of RF voltage applied to the quadrupole mass filter.
[FIG. 6] FIG. 6 is a drawing illustrating the first feedback system of RF voltage control.
[FIG. 7] FIG. 7 is a drawing illustrating the second feedback system of RF voltage control.
[FIG. 8] FIG. 8 is a drawing illustrating the third feedback system of RF voltage control.

### Description of Embodiments

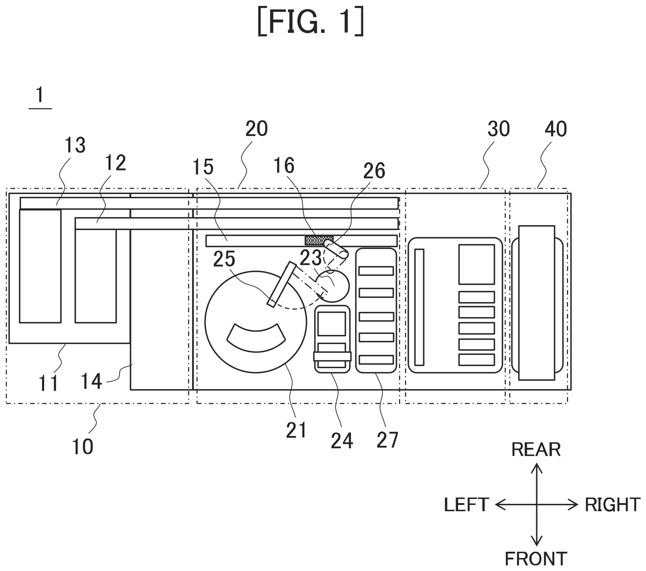

FIG. 1 is a configuration example of a mass spectrometer 1 in a present embodiment. The mass spectrometer 1 is composed mostly of a sample charging unit 10, a pre-processing unit 20, a separation unit 30, and a mass spectrometry unit 40. The sample to be analyzed is accommodated in a sample container. The sample container is installed in a sample rack 16, and charged into the mass spectrometer 1 from the sample charging unit 10.

The sample charging unit 10 includes a sample carry-in/out unit 11 and a buffer unit 14. The sample rack 16 charged into the sample carry-in/out unit 11 is carried out toward the pre-processing unit 20 by a rack transportation mechanism 12. In the pre-processing unit 20, the sample rack 16 is transported to a rack transportation mechanism 15. At a dispensation position on the rack transportation mechanism 15, a required amount of the sample is dispensed from the sample container into a reaction container on an incubator 23. After finishing dispensation to all the samples accommodated in a plurality of sample containers installed in the sample rack 16, the sample rack 16 is transported from the rack transportation mechanism 15 to a rack transportation mechanism 13. The rack transportation mechanism 13 returns the sample rack 16 to the sample carry-in/out unit 11 so that an operator collects the sample rack. If the number of the sample racks 16 to be charged into the sample carry-in/out unit 11 is too large to catch up the analytical process by the mass spectrometer 1, the buffer unit 14 is used to evacuate the sample rack 16 temporarily to avoid congestion of the sample racks 16 on the rack transportation mechanism 12. In an example as illustrated in FIG. 1, a transportation mechanism of belt conveyor type is exemplified as the rack transportation mechanism. The transportation mechanism, however, is not limited to the type as described above.

The pre-processing unit 20 is a unit for executing the pre-processing for the mass analysis. The content of the pre-processing is not limited. The pre-processing unit 20, for example, executes the process for amplifying an analysis object component in the sample. The pre-processing unit 20 includes a reagent cold storage 21 for storing the reagent necessary for the pre-processing, the incubator 23 for promoting the reaction of a mixture of the reagent and the sample while keeping its temperature constant, a reaction container supply mechanism 24 for storing the reaction container in which the reagent and the sample are mixed, and supplying the reaction container to the incubator 23, a reagent dispensing mechanism 25 for dispensing the reagent from the reagent container stored in the reagent cold storage 21 to the reaction container on the incubator 23, a sample dispensing mechanism 26 for dispensing the sample from the sample container on the sample rack 16 to the reaction container on the incubator 23, and a sample extraction unit 27 for removing the component unnecessary for the subsequent process from the reaction liquid derived from the reagent and the sample, having the reaction on the incubator 23 finished.

The separation unit 30 is a unit for separating the sample pre-processed in the pre-processing unit 20 into a plurality of components. The mass spectrometry unit 40 is a unit (mass analyzer) for performing the mass spectrometry with respect to the plurality of components separated by the separation unit 30. The liquid chromatography mass spectrometry (LC-MS) is well known as the analytical system which uses a liquid chromatograph as the separation unit 30, and the mass analyzer as the detector of the liquid chromatograph.

The mass spectrometer 1 is composed of the sample charging unit 10, the pre-processing unit 20, the separation unit 30, and the mass spectrometry unit 40, each of which is modularized. Those modularized units are combined to constitute the apparatus. This ensures the entire apparatus to be made compact. Provision of an additional module allows customization of the processing capacity of the apparatus in accordance with its use. For example, as an example in FIG. 1 illustrates, single units of the respective modules are combined to constitute the apparatus. It is further possible to constitute the apparatus by combining additional modules including each unit of the separation unit 30 and the mass spectrometry unit 40 to enhance the LC-MS analytical ability.

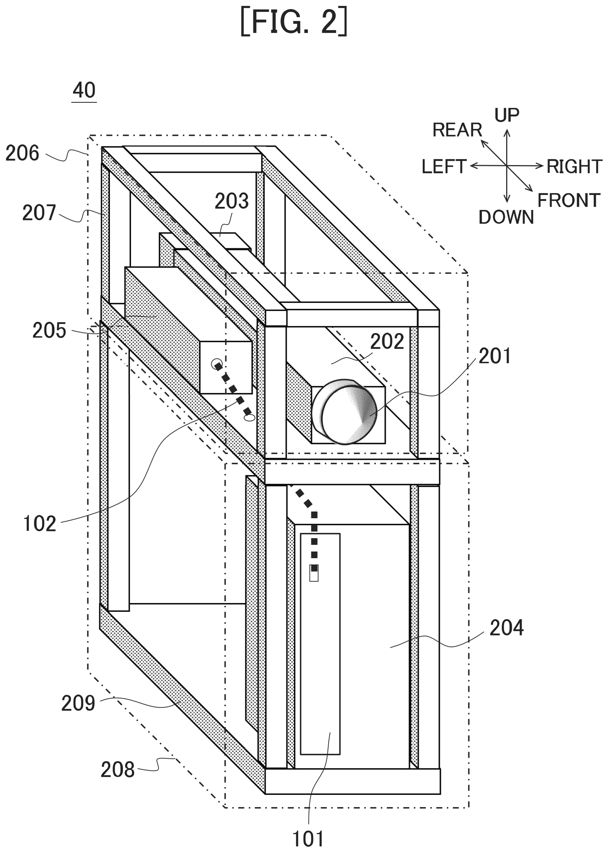

FIG. 2 shows a layout example of units configuring the mass spectrometry unit 40. The mass spectrometry unit 40 is composed of a plurality of units. Major parts of those units are illustrated herein. As an example of a structure in FIG. 2 illustrates, the mass spectrometry unit 40 is composed of an upper housing 206 and a lower housing 208. The upper housing 206 and the lower housing 208 include metal frames 207 and 209, respectively for supporting the units disposed in the respective housings. A panel (not shown) for protecting the inside of each housing is attached to the frames 207, 209, respectively. The housings of upper and lower stage type allow reduction in the area of the front surface of the mass spectrometry unit 40. The mass spectrometer 1, thus, can be made compact.

The upper housing 206 houses an ionization unit 201, a mass analysis unit 202, a mass detection unit 203, and an RF output unit 205. The ionization unit 201 is a unit for ionizing the analysis object specimen. In the LC-MS method, the specimen separated by the liquid chromatograph becomes the analysis object specimen. The ion generated by the ionization unit 201 is introduced into the mass analysis unit 202. The mass analysis unit 202 allows passage of the ion with a predetermined mass to charge ratio (m/z) among the introduced ions, and guides the passing ion to the mass detection unit 203. The mass detection unit 203 detects and counts the introduced ions. This embodiment exemplifies the use of a quadrupole mass filter as the mass analysis unit 202.

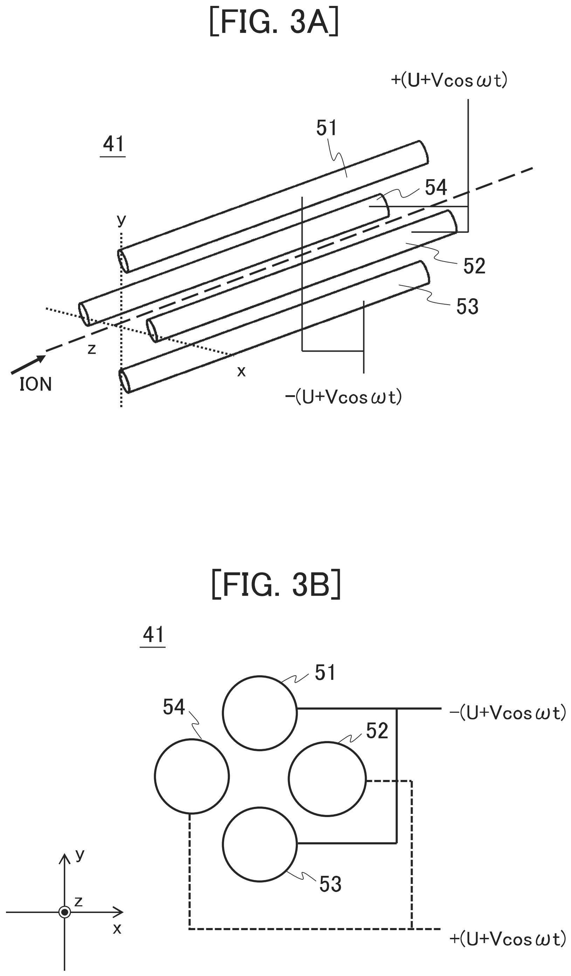

A structure of the quadrupole mass filter will be described with reference to FIGS. 3A and 3B. FIG. 3B is a sectional view of the quadrupole mass filter as illustrated in FIG. 3A in a plane vertical to a center axis of the quadrupole mass filter. Four cylindrical electrodes 51 to 54, which constitute a quadrupole mass filter 41 are arranged equidistant from the center axis (ion optical axis) so that they are parallel to one another in the longitudinal direction. In this case, the first electrode 51 and the third electrode 53 constitute an electrode pair with respect to a y-axis direction. The second electrode 52 and the fourth electrode 54 constitute an electrode pair with respect to an x-axis direction. A direct current voltage U and a radio-frequency voltage (hereinafter referred to as an RF voltage) V_{cosωt} (ω: frequency, t: time) are superimposingly applied to the quadrupole mass filter 41. Direct current voltages each having the same polarity (first polarity) are applied to the opposing electrodes, and direct current voltages each having the reverse polarity (second polarity) are applied to the adjacent electrodes.

Application of the voltages to the quadrupole mass filter 41 generates an electric field therein. The electric field vibrates the ion introduced from the ionization unit 201 in the x-axis direction or the y-axis direction. The ion with the mass to charge ratio within the specific range, which is defined by (U, V, ω) of the applied voltage is brought into a stably vibrated state. The ion passing through the quadrupole mass filter 41 reaches the mass detection unit 203. Meanwhile, the ions with other mass to charge ratios are brought into unstably vibrated state. They may impinge on the electrode, or jump out of the system, thus failing to reach the mass detection unit 203.

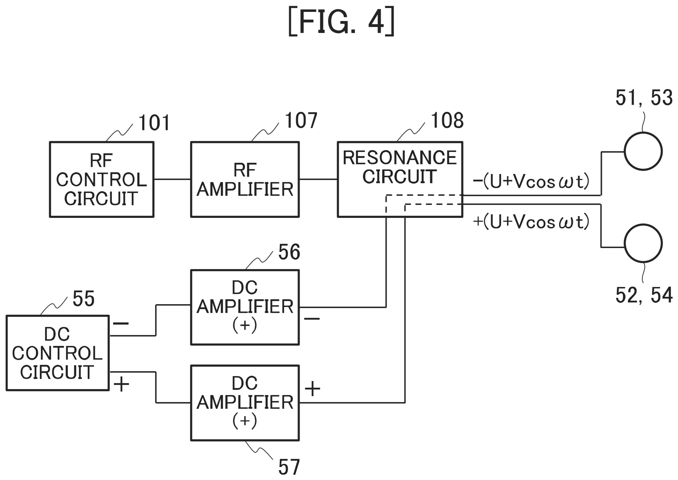

FIG. 4 illustrates an example of a structure of a power circuit that superimposingly applies the direct current voltage U and the RF voltage V_{cosωt} (ω: frequency, t: time) to the quadrupole mass filter 41. The power circuit includes a DC control circuit 55, DC amplifiers 56, 57, an RF control circuit 101, an RF amplifier 107, and a resonance circuit 108. The resonance circuit 108 includes a transformer. The RF voltage V_{cosωt} is applied to a primary coil of the transformer from the RF amplifier 107. The transformer includes two secondary coils, each one end of which is connected to the electrode pair 51, 53 in the y-axis direction, and connected to the electrode pair 52, 54 in the x-axis direction, respectively. The other ends of the secondary coils are connected to the DC amplifier 56 to which the direct current voltage -U is applied, and to the DC amplifier 57 to which the direct current voltage +U is applied. The DC control circuit 55 controls the magnitude of the direct current voltage to be applied, and the RF control circuit 101 controls the amplitude and frequency of the RF voltage to be applied.

Returning to the description with reference to FIG. 2, the layout of units constituting the mass spectrometry unit 40 will be described. As the ionization unit 201 is expected to be regularly maintained by the operator, it is disposed on the front surface side of the upper housing 206 to allow easy access by the operator (see FIG. 1). This inevitably causes the mass analysis unit 202 and the mass detection unit 203 to be arranged behind the ionization unit 201 in the upper housing 206.

Meanwhile, the control unit for controlling the mass spectrometry unit 40 is disposed in the lower housing 208. A plurality of circuit substrates are mounted as the control unit. The plurality of circuit substrates are installed in a substrate storage unit 204 to be disposed on the front surface side of the lower housing 208. The plurality of circuit substrates include, in addition to the control substrate, an RF substrate in which the above-described RF amplifier 107 is installed, a DC substrate in which the DC amplifiers 56, 57 are installed, and a communication substrate for communication with external devices. It is preferable to provide those circuit substrates on the front surface side which allows easy access by the operator for simplifying the service maintenance such as a substrate replacement operation. Accordingly, the substrate storage unit 204 is disposed on the front surface side of the lower housing 208.

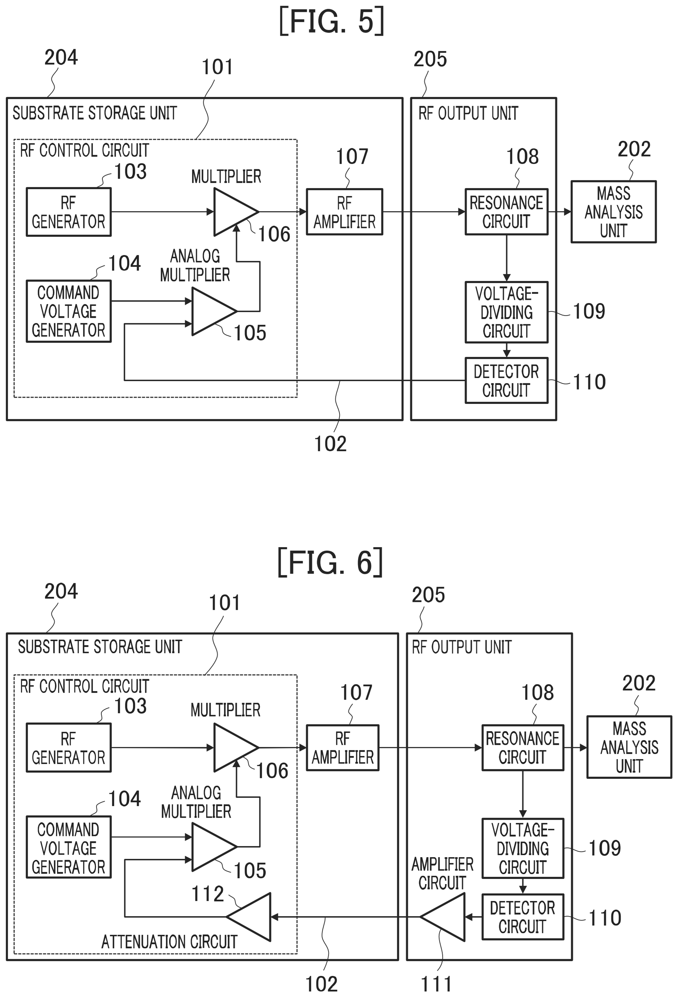

A description will be made with respect to an RF voltage control operation of the quadrupole mass filter 41 in the mass analysis unit 202. FIG. 5 illustrates the control circuit of the RF voltage (V_{cosωt}) to be applied to the quadrupole mass filter 41. As described above, the ion passing through the mass analysis unit 202 is determined by the (U, V, ω) of the voltage applied to the quadrupole mass filter 41. Accordingly, the RF voltage to be applied to the quadrupole mass filter 41 is feedback controlled so that the required RF voltage is applied. The RF control circuit 101 includes an RF generator 103 for generating the RF signal, a command voltage generator 104 for generating a command voltage corresponding to the amplitude of the RF signal, an analog multiplier 105, and a multiplier 106. The analog multiplier 105 generates a control signal based on, for example, the PI control using the command voltage output from the command voltage generator 104, and the feedback signal, and transmits the generated signal to the multiplier 106. The multiplier 106 multiplies the control signal from the analog multiplier 105 by the RF signal from the RF generator 103. The RF amplifier 107 amplifies the RF signal output from the multiplier 106, and supplies the amplified RF voltage to the resonance circuit 108. A direct current voltage from the DC amplifiers 56, 57 is input to the resonance circuit 108 (see FIG. 4), and the direct current voltage and the RF voltage are superimposingly applied to the quadrupole mass filter 41. The RF voltage output from the resonance circuit 108 is divided by a voltage-dividing circuit 109 so that the detector circuit 110 detects the amplitude of the RF signal of the divided voltage as the direct current voltage. The direct current voltage detected by a detector circuit 110 is input, as the feedback signal, to the analog multiplier 105.

When mounting the RF voltage control circuit on the mass spectrometry unit 40 (module), the RF control circuit 101 and the RF amplifier 107 are mounted on the circuit substrates, respectively, and installed in the substrate storage unit 204. In order to reduce the loss and characteristic fluctuation of the resonance circuit 108, the resonance circuit 108 has to be disposed at the position adjacent to the mass analysis unit 202. For this, the resonance circuit 108 is disposed in the upper housing 206 as the RF output unit 205. The RF output unit 205 includes the voltage-dividing circuit 109 for generating the feedback signal and the detector circuit 110. As a result, a signal line 102 for transferring the feedback signal becomes a long-distance signal line for connection between the RF output unit 205 disposed in the upper housing 206, and an RF control substrate installed in the substrate storage unit 204 to be disposed in the lower housing 208.

When transferring the feedback signal in the long-distance signal line, there may be a concern for deterioration in the feedback control accuracy for the reason that: a potential difference (GND potential difference) is generated between the reference potential as GND of the detector circuit 110 and the reference potential as GND of the RF control circuit 101, or the long-distance signal line functioning as an antenna is likely to cause superimposition of noise. The deterioration in the feedback control accuracy leads to lowered analytical sensitivity of the mass spectrometry unit 40.

The signal line 102 of the embodiment is configured to convert the feedback signal from the detector circuit 110 into the signal with high noise resistance property (hereinafter referred to as a noise resistance signal) temporarily. After a long-distance transfer of the noise resistance signal, the signal is converted again into the voltage signal.

### First Embodiment

FIG. 6 illustrates a first feedback control system (first embodiment). In the first embodiment, the feedback signal, as the noise resistance signal, from the detector circuit 110 is converted into a signal of voltage higher than the power supply voltage to be used by the RF control circuit 101. In the RF output unit 205, an amplifier circuit 111 is disposed in a stage subsequent to the detector circuit 110. In the RF control circuit 101, an attenuation circuit 112 is disposed in a stage previous to the analog multiplier 105. The amplifier circuit 111 and the attenuation circuit 112 are connected by the signal line 102.

The feedback signal is input to the analog multiplier 105 together with the command voltage generated by the command voltage generator 104. Accordingly, the maximum value of the command voltage needs to match the maximum voltage of the feedback signal. For example, the 5V-system D-A converter is employed as the command voltage generator 104. In the first embodiment, the direct current voltage detected by the detector circuit 110 is amplified by the amplifier circuit 111 to a maximum voltage of 15 V, for example, and transferred in the signal line 102. The attenuation circuit 112 converts the voltage again into the 5V-system feedback signal. Transfer of the signal line 102 is performed at the voltage higher than the power supply voltage to be used by the command voltage generator 104. This makes it possible to reduce the influence of the GND potential difference, and noise generated during transfer.

In the first embodiment, the feedback signal is amplified, and is transferred in the signal line 102. This makes it possible to improve the noise resistance property of the feedback signal. It is possible to improve maintainability without lowering the analytical sensitivity of the mass spectrometry unit 40.

### Second Embodiment

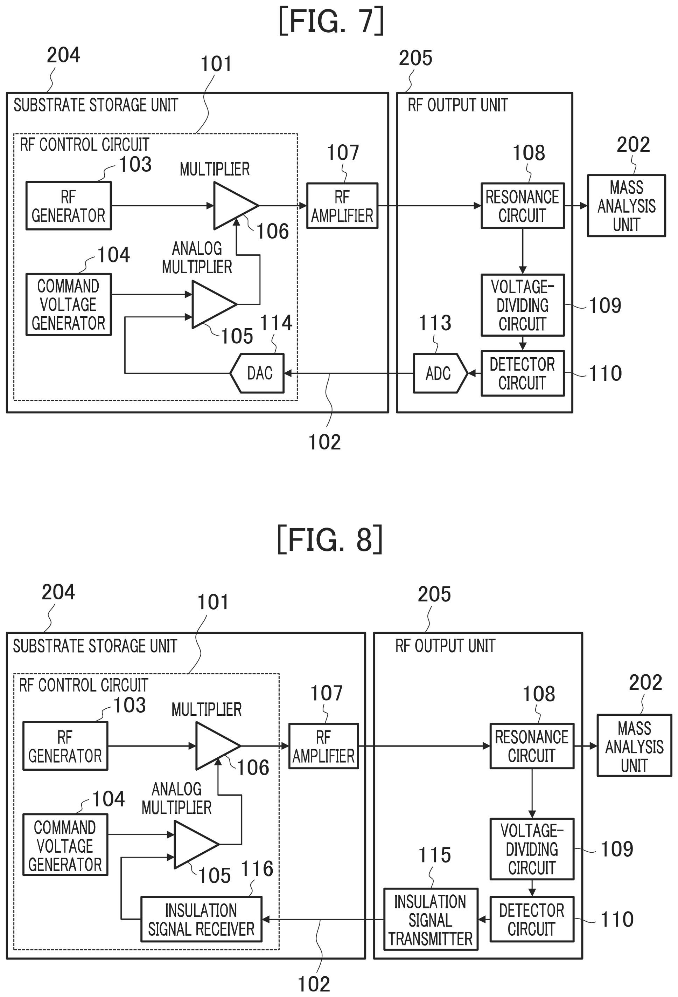

FIG. 7 illustrates a second feedback control system (second embodiment). In the second embodiment, the feedback signal from the detector circuit 110 is converted into a digital signal as the noise resistance signal. For this, in the RF output unit 205, an analog-digital converter (ADC) 113 is disposed in a stage subsequent to the detector circuit 110, and a digital-analog converter (DAC) 114 is disposed in a stage previous to the analog multiplier 105 in the RF control circuit 101. The ADC 113 and the DAC 114 are connected by the signal line 102.

In the second embodiment, the feedback signal is transferred as the digital signal in the signal line 102 to improve the noise resistance property of the feedback signal. It is possible to improve maintainability without lowering the analytical sensitivity of the mass spectrometry unit 40.

### Third Embodiment

FIG. 8 illustrates a third feedback control system (third embodiment). In the third embodiment, the feedback signal is transferred in the electrically insulated state (insulated transfer) across both ends of the signal line 102. For example, the feedback signal from the detector circuit 110 is converted into an optical signal as the noise resistance signal. For this, in the RF output unit 205, an insulation signal transmitter 115 is disposed in a stage subsequent to the detector circuit 110. In the RF control circuit 101, an insulation signal receiver 116 is disposed in a stage previous to the analog multiplier 105. The insulation signal transmitter 115 and the insulation signal receiver 116 are connected by the signal line 102. When transferring the optical signal, it is possible to use a photoelectric conversion element as the insulation signal transmitter 115, a photoelectric conversion element as the insulation signal receiver 116, and an optical fiber as the signal line 102.

In the third embodiment, insulated transfer of the feedback signal improves the noise resistance property of the feedback signal. It is possible to improve maintainability without lowering the analytical sensitivity of the mass spectrometry unit 40.

The present invention is not limited to the above-described embodiments, and includes various modifications. For example, the present invention described above have been described in detail to simply describe the present disclosure, and are not necessarily required to include all the described configurations. In addition, part of the configuration of the embodiments can be subjected to addition, deletion, and replacement with respect to other configurations.

### [List of Reference Signs]

1...mass spectrometer, 10...sample feeding unit, 11...sample carry-in/out unit, 12, 13, 15...rack transportation mechanism, 14...buffer unit, 20...pre-processing unit, 21...reagent cold storage, 23...incubator, 24...reaction container supply mechanism, 25...reagent dispensing mechanism, 26...sample dispensing mechanism, 27...sample extraction unit, 30...separation unit, 40...mass spectrometry unit, 41...quadrupole mass filter, 51...first electrode, 52...second electrode, 53...third electrode, 54...fourth electrode, 55...DC control circuit, 56, 57...DC amplifier, 101...RF control circuit, 102...signal line, 103...RF generator, 104... command voltage generator, 105...analog multiplier, 106...multiplier, 107...RF amplifier, 108...resonance circuit, 109...voltage-dividing circuit, 110...detector circuit, 111...amplifier circuit, 112...attenuation circuit, 113...analog-digital converter, 114...digital-analog converter, 115...insulation signal transmitter, 116...insulation signal receiver, 201...ionization unit, 202...mass analysis unit, 203...mass detection unit, 204...substrate storage unit, 205...RF output unit, 206...upper housing, 207, 209...frame, 208...lower housing

## Claims

1. A mass spectrometer, comprising:
a mass spectrometry unit, wherein
the mass spectrometry unit includes a first housing and a second housing, the second housing being disposed below the first housing,
an ionization unit, a mass analysis unit, a mass detection unit, and an RF output unit are disposed in the first housing, the ionization unit ionizing an analysis object specimen, the mass analysis unit including a quadrupole mass filter, ions being introduced to the quadrupole mass filter from the ionization unit, the quadrupole mass filter making an ion having a predetermined mass to charge ratio (m/z) pass through the quadrupole mass filter, the mass detection unit detecting the ion having passed through the mass analysis unit, the RF output unit including a resonance circuit superimposingly applying direct current voltage and radio-frequency voltage to the quadrupole mass filter,
a substrate storage unit is disposed in the second housing, the substrate storage unit storing at least a control circuit substrate and an RF substrate, the control circuit substrate including an RF control circuit generating a radio-frequency signal, the RF substrate including an RF amplifier amplifying the radio-frequency signal and supplying the amplified radio-frequency signal to the resonance circuit,
the ionization unit, the mass analysis unit, and the mass detection unit are disposed in the first housing from a front surface toward a rear surface, and
the substrate storage unit is disposed in the second housing on the front surface.

2. The mass spectrometer according to claim 1, wherein
the mass spectrometry unit includes a signal line connecting a detection circuit included in the RF output unit and the RF control circuit,
the detection circuit generates a feedback signal expressing amplitude of the radio-frequency voltage applied to the quadrupole mass filter, and
the RF control circuit controls amplitude of the radio-frequency signal according to the feedback signal transferred by the signal line.

3. The mass spectrometer according to claim 2, wherein
the feedback signal is converted into a noise resistance signal in the RF output unit to be transferred in the signal line, and is converted again into a voltage signal in the RF control circuit.

4. The mass spectrometer according to claim 2, wherein
the RF output unit includes an amplifier circuit amplifying the feedback signal, and
the RF control circuit includes an attenuation circuit attenuating the feedback signal transferred by the signal line.

5. The mass spectrometer according to claim 2, wherein
the RF output unit includes an analog-digital converter converting the feedback signal into a digital signal, and
the RF control circuit includes a digital-analog converter converting the feedback signal transferred by the signal line into an analog signal.

6. The mass spectrometer according to claim 2, wherein
the signal line insulates and transfers the feedback signal,
the RF output unit includes an insulation signal transmitter, and
the RF control circuit includes an insulation signal receiver.

7. The mass spectrometer according to any one of claims 1 to 6, further comprising:
a pre-processing unit that executes pre-processing of a sample; and
a separation unit that separates the sample into a plurality of components, the sample having been pre-processed by the pre-processing unit, wherein
a component of the sample separated by the separation unit is made the analysis object specimen, and
the pre-processing unit, the separation unit, and the mass spectrometry unit are disposed to be arrayed in this order in a right-left direction that is orthogonal to a front-rear direction of the mass spectrometry unit.
